# EUROPEAN PATENT SPECIFICATION

(11) **EP 2 344 932 B1**
(45) Date of publication and mention of the grant of the patent: **13.03.2019**
(21) Application number: 09825563.1
(22) Date of filing: 09.11.2009
(51) Int. Cl.: G03H 1/02, G03H 1/22, G03H 1/26, G03H 1/04, G02B 5/18

(54) **Method of making an improved multi-axis diffraction grating**
Verfahren zur Herstellung eines verbesserten mehrachsigen Diffraktionsgitters
Procédé de fabrication d'un réseau de diffraction multi-axes amélioré

(30) Priority: 10.11.2008 US 113032 P; 06.11.2009 US 614053
(43) Date of publication of application: 20.07.2011
(73) Proprietor: Illinois Tool Works Inc., Glenview, IL 60025 (US)
(72) Inventor: SPOTO, Louis M., Hampton Falls NH 03844 (US); RANDAZZO, Dean J., Chicago IL 60609 (US); DESCHNER, Matthew J., Downers Grove IL 60516 (US)
(74) Representative: HGF Limited
(86) International application number: PCT/US2009/063749
(87) International publication number: WO 2010/054329

(56) References cited:
- US-A- 4 923 572
- US-A1- 2002 163 680
- US-A1- 2007 037 065
- US-A1- 2007 037 065
- US-A1- 2007 258 119
- US-B2- 6 567 193
- US-B2- 6 653 593
- RUTERBUSCH P H ET AL: "Progress report on archival storage of color films by a one-step rainbow holographic process", OPTICS COMMUNICATIONS, NORTH-HOLLAND PUBLISHING CO. AMSTERDAM, NL, vol. 37, no. 5, 1 June 1981 (1981-06-01), pages 335-338, XP024467408, ISSN: 0030-4018, DOI: 10.1016/0030-4018(81)90430-2 [retrieved on 1981-06-01]

## Description

### CROSS-REFERENCE TO RELATED APPLICATION

This application claims the benefit of priority of Provisional U.S. Patent Application Serial No. 61/113,032, filed November 10, 2008, entitled "IMPROVED MULTI-AXIS DIFFRACTION GRATING".

### BACKGROUND OF THE INVENTION

The present invention is directed to a method of producing embossing shims. More particularly, the present invention pertains to a method of making embossing shims for the production of diffractive surfaces such as holograms or gratings having enhanced color shifting or optically variable backgrounds.

Reflective transparent, semitransparent, and opaque materials containing embossed holographic images are commonly used in security and decorative applications such as passports, credit cards, security passes, licences, stamps, as well as gift wrap, book illustrations, and the like. Protection is achieved by affixing holographic or optically variable films to the documents. It is very difficult to forge and counterfeit such documents as such holographic or optically variable films are not easily copied using conventional printing techniques.

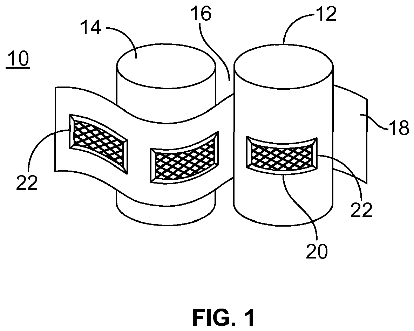

Holographic films are generally produced by metalizing an embossed pattern of a three dimensional image. Traditional embossing applies pressure to either side of a material to alter the surface, giving the material a three dimensional or raised effect. In other words, traditional embossing transfers the 3D microstructure image to the material. Typical film embossing machines use two cylindrical rollers, an embossing roller, as shown in FIG. 1. An embossing stamper with a textured pattern, also known as an embossing shim, is attached to the embossing roller. Film, generally between 0.0010 cm and 0.0025 cm (.0004 and .001 inches) thick or greater, is pushed or pulled between the two rollers. The raised or textured embossing shim located on the embossing roller forces the film against the backing roller to create the embossed impression in the film. The film can later be laminated to paper, cardboard, plastic, metals, or other substrates.

The embossed side of the impression may be aluminized or metalized to turn the 3D microstructure into a reflection hologram. Holographic patterns for the embossing shims are typically created by exposing a photosensitive emulsion-covered substrate to two beams from a coherent light source and etching or developing the resulting interference pattern into the photosensitive emulsion or photoresist.

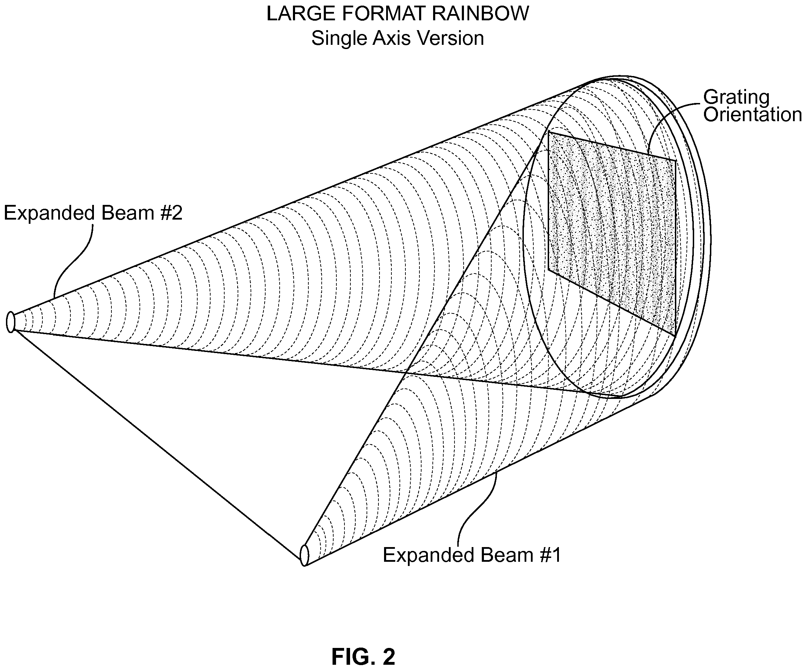

Holographic patterns typically include optical interference patterns such as diffraction gratings. A diffraction grating is an optical interference pattern in which a component with a regular pattern splits (diffracts) light into several beams traveling in different directions. Single axis diffraction gratings, producing large format rainbow reflective foil/film holograms, as shown in FIG. 2, are created by interfering two expanded beams of coherent light from a single laser. Incident light is diffracted in two directions. Diffraction gratings, which produce an iridescent-type effect by diffracting ambient light into its color components, "rainbow holograms", are well-known in the art.

Holographic images generally require direct illumination for the diffraction colors to be visible. Thus, in order to view the diffraction colors, the holographic image must be viewed from the same angle from which the holographic image is illuminated. Thus, rainbow or iridescent colored light reflecting from the hologram is generally visible in only two directions, usually at 0 degrees and 180 degrees. When viewed from other directions or angles, color is not visible and the hologram appears dark or gray/silver. Thus, the field of view is relatively limited.

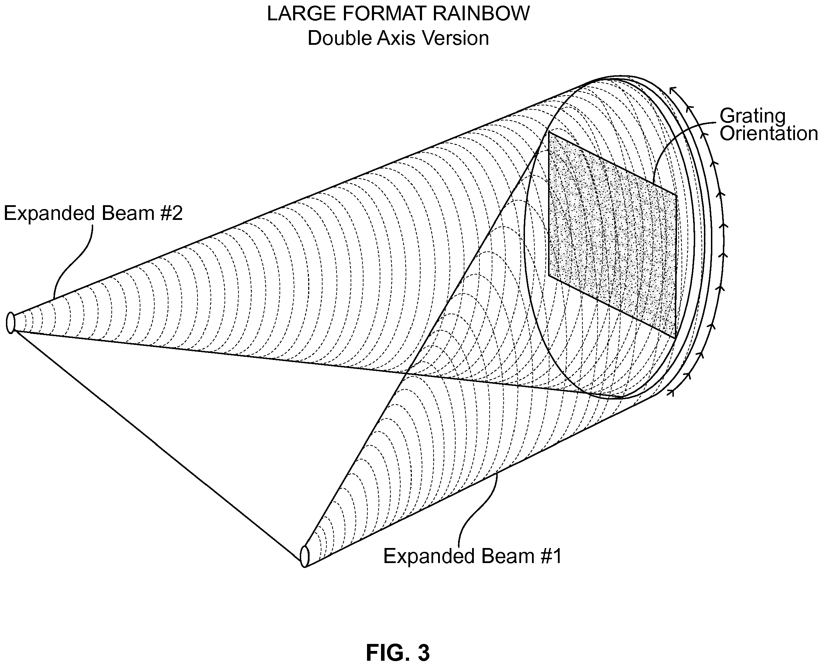

A cross-grating pattern, as shown in FIG. 3, is a commonly produced optical interference pattern in which a single axis grating is used to create large format rainbow reflective foil/film holograms as described above, then the two beams are rotated with respect to the original grating by 90 degrees. Rotating the beams increases the field of view for the hologram, such that the field of view or rainbow color is visible from more than two angles. The resultant cross-grating diffracts light (i.e. allows color to be visible) in numerous (4 or more) directions based on the grating frequency, increasing the field of view.

When viewed from above, the light diffracts symmetrically at 0, 90, 180, and 270 degrees. Diffracted beams also appear symmetrically at the off angles (diagonals) (45, 135, 225, 315) at certain frequencies. Using two expanded beams and double exposing the substrate after rotating, however, creates only symmetrically diffracted beams. If an asymmetrical output is desired, the geometry and/or frequency of the grating are changed between exposures. Thus, unless the frequency and/or grating is changed, or the substrate is double exposed, the intensity or brightness of the light/color is diminished at certain diffracting angles.

In addition, large format rainbow diffraction gratings created by two beams are twice as susceptible to vibration. The two beam technique requires the substrate to be exposed twice to the interference pattern in order to achieve a desired brightness, and therefore, requires handling of the substance between exposures. The additional handling of the beams and/or the substrate increases the opportunity for error, vibration, image contamination, or uneven cross grating efficiency.

Accordingly, there is a need to control the field of view of an optical interference pattern, such as a diffraction grating hologram, and increases the brightness and intensity of the diffraction grating patterns while minimizing the handling of the substrate.

U.S. Pat. No. 2007/037065 describes a method for ablating holographic patterns directly onto a surface of polymeric coatings deposited on an embossing cylinder using the interference of laser beams. US2002/0163680 A1 discloses a method of making an optical interference pattern on a photopolymer film by using a set of three expanded light beams directed onto said photopolymer film.

### BRIEF SUMMARY OF THE INVENTION

The present invention provides a method according to claim 1.

Embodiments of the method is according to claim 2. An enhanced optical interference pattern for an embossing shim, such as an enhanced diffraction grating hologram, is created using three or more beams from a coherent source to produce a diffraction grating hologram which has a more intense or stronger visual effect that previous holograms when exposed to white light. Three or more beams of coherent light from a single source are directed toward a photodefinable surface, such as a photoresist plate or an ablatable substrate. The three beams interfere with one another and produce, on a given substrate, a diffraction grating hologram with in increased field of view than previous methods provided, without having to expose the substrate twice to the beams and without increased handling of the photoresist plate or ablatable substrate.

In an embodiment, an optical interference pattern, such as a diffraction grating pattern, is incorporated into a photodefineable surface, such as a photosensitive emulsion/photoresist covered glass ("photoresist plate") by exposing the photodefinable surface to three or more beams from a coherent light source. In another embodiment, a photodefinable surface is directly ablated with three or more beams from a coherent light source. The photodefinable surface is electroplated to form a metal master shim. The photodefinable metal master is nickel-plated for use as an embossing shim. Formation of the optical interference pattern is created by interference of three or more light beams, such as laser light, arc light or other monochromatic light sources producing a suitable spectrum of light when illuminated by a point source such as sunlight, incandescent or florescent light.

The resulting diffraction grating pattern is etched, developed or ablated onto the photodefinable surface. The etched/developed photodefinable surface is used to create embossing shims. The embossing shim can then be used to emboss film or paper in mass. The embossed film/paper can be metalized and laminated onto a substrate to create a holographic product that has shifting patterns and rainbow colors at a variety of viewing angles when exposed to white light.

These and other features and advantages of the present invention will be apparent from the following detailed description, in conjunction with the appended claims.

### BRIEF DESCRIPTION OF THE SEVERAL VIEWS OF THE DRAWINGS

The benefits and advantages of the present invention will become more readily apparent to those of ordinary skill in the relevant art after reviewing the following detailed description and accompanying drawings, wherein:
FIG. 1 illustrates an embossing apparatus using embossing shims;
FIG. 2 illustrates a single axis large format rainbow diffraction grating made with two beams;
FIG. 3 illustrates a double axis large format rainbow diffraction grating created with two beams;
FIG. 4 illustrates a large format rainbow diffraction grating created in accordance with the principles of the present invention;
FIG. 5 illustrates another embodiment of the method for creating optical interference patterns wherein the three beams are narrowly focused in one pixel and then the photodefinable surface is translated in the XY direction such that multiple pixilated holograms are formed to create a larger overall holographic image composed of multiple holographic dots created in accordance with the principles of the present invention.

### DETAILED DESCRIPTION OF THE INVENTION

While the present invention is susceptible of embodiment in various forms, there is shown in the drawings and will hereinafter be described a presently preferred embodiment with the understanding that the present disclosure is to be considered an exemplification of the invention and is not intended to limit the invention to the specific embodiment illustrated.

An enhanced optical interference pattern, such as a diffraction grating foil/film hologram is created by directing or shining three or more beams of coherent light from a single source onto a photodefinable surface, such as a photoresist plate or an ablatable substrate. The three beams interfere with one another and produce an optical interference pattern on the photodefinable surface that provides more control of the angular playback resulting in a hologram having a wider field of view than previous methods provided, without having to expose the photodefinable surface twice to the beams and without increased handling of the photoresist plate.

Referring now to FIG. 1, there is shown an apparatus 10 for making shallow relief/holographic embossings on film or paper. An embossing cylinder or roller 12 and a backing cylinder or roller 14 are positioned adjacent one another with a nip 16 formed between the two rollers 12, 14. A film 18 is pushed or pulled through the nip 16, between the rollers 12, 14. An embossing shim 20 is wrapped around the embossing roller 12. As the film 18 is pushed against the backing roller 14 and the embossing shim 20, an embossed image 22 is formed on the film 18. The embossing shims 20 used on the apparatus 10 described above having an enhanced diffraction grating pattern which is formed using an embodiment of the method described below.

An optical interference pattern, such as a diffraction grating, is produced by interference of light beams from a coherent source. Chart 1 below illustrates an example of a sinusoidal wave pattern for light wave interference of two waves or two light beams. The first sinusoidal wave represents a light beam 32. The second sinusoidal wave represents a light beam 34, ninety degrees phase shifted from light wave 32. The third sinusoidal wave 33 represents the interference pattern of the two light beams 32, 34. As is shown, the two expanded light beams 32, 34 constructively interfere at intersection A and B to create a greater intensity light wave 33. The diffraction grating pattern 30 can have diffraction at a specific angle to the normal at 45 (π/4), 135 (3π/4), 225 (5π/4), and 315 (7π/4) degrees (with respect to wavelength interference), in addition to a similar set of diffractive angles with respect to the first set at 0,90 (π/2), 180 (π), and 270 (3π/2) degrees.

Similarly, Chart 2 below illustrates an example of a sinusoidal wave pattern for light wave interference of three waves or three light beams from a coherent source. The first sinusoidal wave represents a beam 32. The second sinusoidal wave represents beam 34, ninety degrees phase shifted from light wave 32, and the third sinusoidal wave represents beam 36, phase shifted from the first two beams. The sinusoidal wave 33 illustrates the interference pattern of the two beams 32, 34, and sinusoidal wave 35 illustrates the interference pattern of light beams 34, 36. As is shown, the two light beams 32, 34 add where they intersect at A and B to create a greater intensity light wave 33.

Light beams 34 and 36 also form interference pattern wave 35 to create greater intensity of light when the two beams intersect at C and D. The diffraction grating pattern 30 can have diffraction at a specific angle to the normal at 45 (π/4), 135 (3π/4), 225 (5π/4), and 315 (7π/4) degrees (with respect to wavelength interference), in addition to a different set of diffractive angles with respect to the first set at 0,90 (π/2), 180 (π), and 270 (3π/2) degrees. In other words there can be multiple angles of diffraction for a wider viewing zone, or increased field of view, all achieved with one 3 beam exposure.

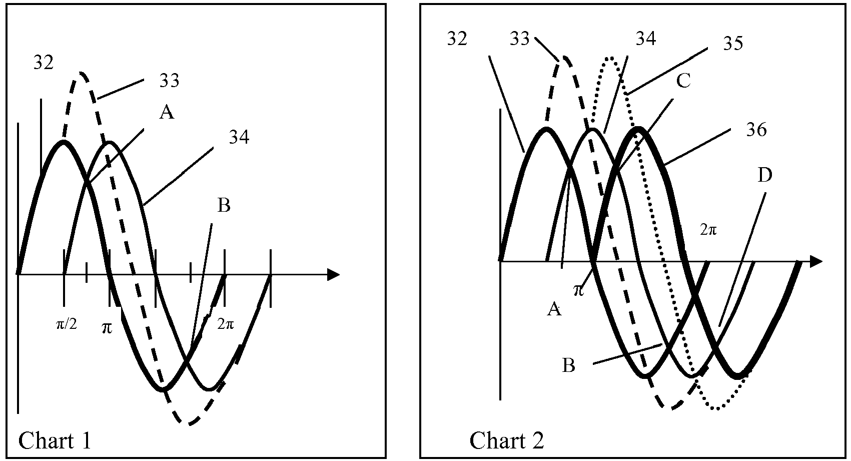

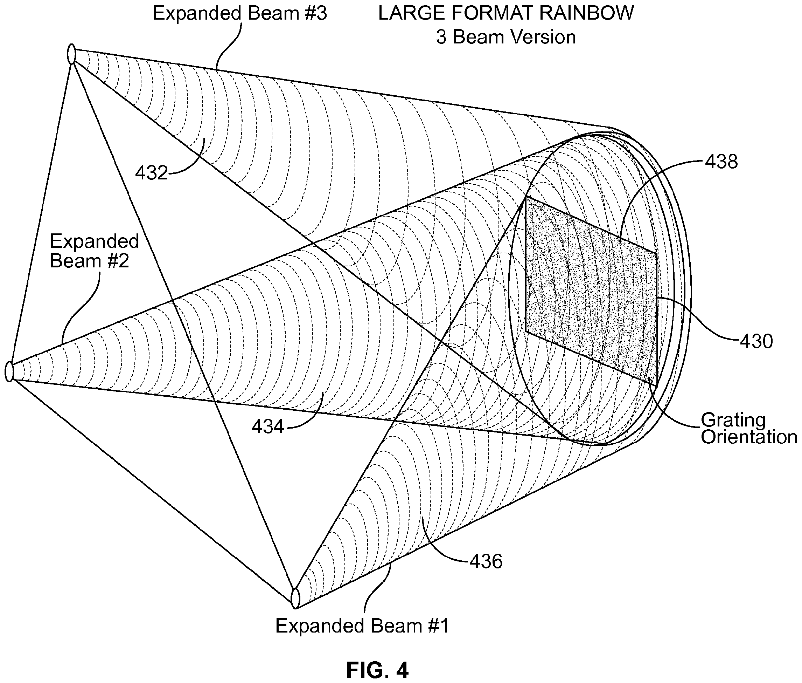

Embodiments of the present invention are described as examples of the present method and are not intended to limit the present method to the embodiments described. An example of a diffraction grating pattern using an embodiment of the three beam method is shown in FIG. 4. The optical interference pattern, such as the diffraction pattern shown, arises when the three beams interfere at specific angles with respect to each other. The interference of the light beams create a diffraction grating pattern that is mapped to, ultimately, an embossing shim having characteristics conducive to producing a hologram that diffracts white light strongly at desirable angles.

The cross-grating pattern in FIG. 4, similar to the one described using the two beam technique and illustrated in FIG. 3, is achieved using the three beam technique, with minimal handling of the photodefinable surface. The beams may also be manipulated to control diffraction of the incident light to generate different visual effects of the hologram. For example, the phase angle of the beams may be changed to achieve different diffraction patterns. Also the phase angle can be changed between two of the three beams to achieve asymmetrical visual effects. In another embodiment, the photodefinable surface may be double exposed using the three (3) beam method of cross grating.

The first embodiment shown in FIG. 4 manipulates three beams, 432, 434, 436 in such a way as to create three (3) large, relatively low energy spots on a large glass plate 38 which is covered with a thin photosensitive emulsion ("photoresist"). The three beams 432, 434, 436 interfere with one another, depending on the angles of incidence, to form a different diffraction grating pattern 430 on the photosensitive emulsion of the plate 438. Unlike the two beam technique, the present method does not require the photoresist plate 438 to be turned ninety degrees to achieve the same or similar diffraction grating pattern.

The resulting mapped photoresist plate 438 is then metalized and electroplated to form an embossing shim having a shallow relief diffraction grating pattern. The embossing shim is used with conventional high speed holographic embossing equipment to form the hologram or embossed image onto the film. The embossed film can then be metalized and laminated onto a substrate to create a product that has shifting patterns that reflect at a variety of viewing angles when exposed to white light.

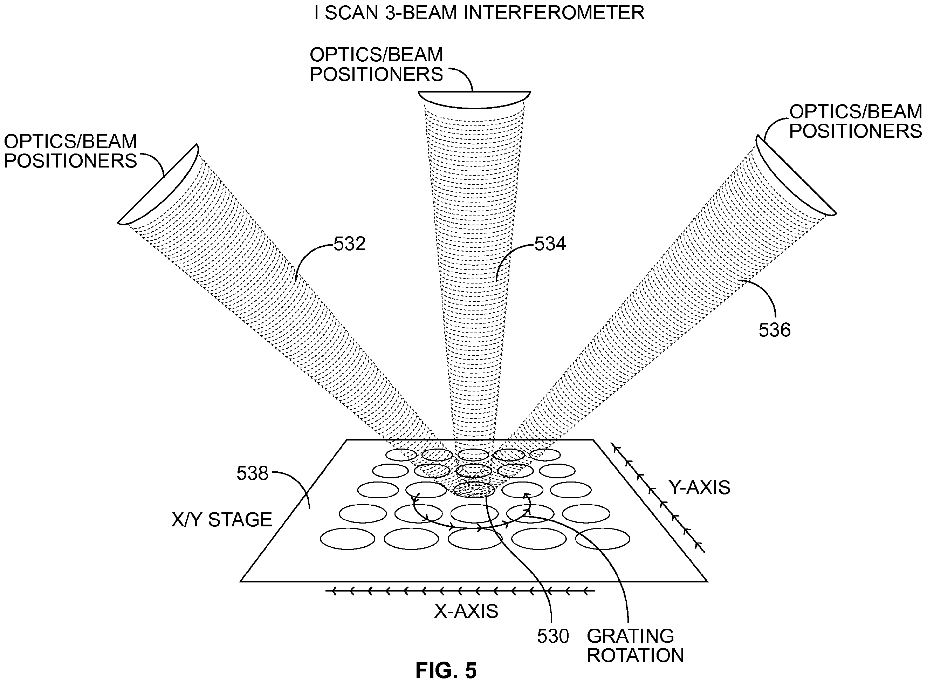

In an alternate embodiment, shown in FIG. 5, a plastic film, such as polyimid, rather than a photoresist plate, is ablated directly into the plastic. In this embodiment, the light beams map a diffraction grating pattern directly onto the plastic film which can then be nickel-plated for use as an embossing shim.

The three beams are manipulated and/or configured to focus each of the light beams 532, 534, 536 down to a very small "dot" ranging from 25 microns to 125 microns. The overlapping light beams 532, 534, 536 contain sufficient energy to directly ablate the surface of a plastic film creating a cross-grating 530. An array of small cross-gratings 530 is created to form a larger image. The narrower beams 532, 534, 536 interfere with each other to form diffraction gratings 530 just as in the first embodiment; these, however, are tiny pixels made on the plastic film 538 surface (rather than a photoresist plate). The plastic film 538 can be used itself without further processing as an embossing shim; however, it is desirable to nickel plate the plastic film 538 to form an embossing shim.

The resulting nickel-plated embossing shim has a holographic relief of the diffraction grating pattern. Additional shim copies are grown for use with traditional high speed holographic embossing equipment. The resulting embossing shim contains an optical image with kinetic playback characteristics.

Those skilled in the art can appreciate the advantages of the present method. The present method 3 beam technique eliminates the need to expose the photodefinable surface twice and eliminates all associated handling between exposures. The three beam technique uniquely uses asymmetry in the beam angles to yield special effects. In addition, the three beam technique also allows the ability to create a cross-grating pixel which can be manipulated into custom images that offer significant improvements in field of view.

The disclosure is intended to cover by the appended claims all such modifications as fall within the scope of the claims.

## Claims

1. A method of making an enhanced optical interference pattern for an embossing shim, the method comprising:
directing three expanded light beams from a coherent light source (432, 434, 436) onto a photodefinable surface (438) in a single exposure, each light beam emitted from a location corresponding to a respective vertex of a triangle, the photodefinable surface including a photosensitive emulsion, each expanded light beam creating a relatively low energy spot on the photodefinable surface;
mapping an optical interference pattern onto the photodefinable surface (438) by interference of the three expanded beams (432, 434, 436) in a single exposure, wherein the optical interference pattern is a diffraction cross-grating (430) on the photodefinable surface (438) produced by the single exposure to the three expanded beams (432, 434, 436); and
producing an embossing shim (20) from the photodefinable surface (438), whereby the photodefinable surface having the three low energy spots is electroplated to form a metal master shim.

2. The method of claim 1 wherein the photodefinable surface (438) is a photoresist surface.

## Patentansprüche

1. Verfahren zum Fertigen eines verbesserten optischen Interferenzmusters für eine Prägescheibe, wobei das Verfahren Folgendes umfasst:
Lenken von drei expandierten Lichtstrahlen von einer kohärenten Lichtquelle (432, 434, 436) auf eine fotodefinierbare Oberfläche (438) in einer einzigen Belichtung, wobei jeder Lichtstrahl von einer Stelle emittiert wird, die einem jeweiligen Eckpunkt eines Dreiecks entspricht, wobei die fotodefinierbare Oberfläche eine fotosensitive Emulsion beinhaltet, wobei jeder expandierte Lichtstrahl einen Punkt mit relativ niedriger Energie auf der fotodefinierbaren Oberfläche erzeugt;
Abbilden eines optischen Interferenzmusters auf die fotodefinierbare Oberfläche (438) durch Interferenz der drei expandierten Strahlen (432, 434, 436) in einer einzigen Belichtung, wobei das optische Interferenzmuster ein Diffraktionskreuzgitter (430) auf der fotodefinierbaren Oberfläche (438) ist, das durch die einzige Belichtung durch die drei expandierten Strahlen (432, 434, 436) produziert wird; und
Produzieren einer Prägescheibe (20) aus der fotodefinierbaren Oberfläche (438), wobei die fotodefinierbare Oberfläche mit den drei Punkten mit niedriger Energie elektroplattiert wird, um eine Metall-Master-Scheibe zu bilden.

2. Verfahren nach Anspruch 1, wobei die fotodefinierbare Oberfläche (438) eine Fotolackoberfläche ist.

## Revendications

1. Procédé de fabrication d'un motif d'interférence optique amélioré pour une plaque d'embossage, le procédé comprenant :
diriger trois faisceaux lumineux élargis depuis une source de lumière cohérente (432, 434, 436) sur une surface photodéfinissable (438) en une seule exposition, chaque faisceau lumineux étant émis à partir d'un emplacement correspondant à un sommet respectif d'un triangle, la surface photodéfinissable comprenant une émulsion photosensible, chaque faisceau lumineux élargi créant un point d'énergie relativement faible sur la surface photodéfinissable ;
tracer un motif d'interférence optique sur la surface photodéfinissable (438) par l'interférence des trois faisceaux élargis (432, 434, 436) en une seule exposition, le motif d'interférence optique étant un réseau croisé de diffraction (430) sur la surface photodéfinissable (438) produit par l'exposition unique aux trois faisceaux élargis (432, 434, 436) ; et
produire une plaque d'embossage (20) à partir de la surface photodéfinissable (438), la surface photodéfinissable comportant les trois points de faible énergie étant traitée par placage électrolytique de façon à former une plaque formant matrice métallique.

2. Procédé selon la revendication 1, dans lequel la surface photodéfinissable (438) est une surface de résine photosensible.
